# EUROPÄISCHE PATENTSCHRIFT

(11) **EP 4 155 599 B1**
(45) Veröffentlichungstag und Bekanntmachung des Hinweises auf die Patenterteilung: **03.07.2024**
(21) Anmeldenummer: 22197425.6
(22) Anmeldetag: 23.09.2022
(51) Int. Cl.: F16L 55/179, F16L 55/18, F16L 55/165, F16L 41/00, F16L 41/08, E03F 3/06

(54) **SYSTEM ZUR ABDICHTUNG UND EINBINDUNG DES MÜNDUNGSBEREICHES EINER IN EIN BEGEHBARES KANALROHR EINMÜNDENDEN ZULAUFLEITUNG**
SYSTEM FOR SEALING AND CONNECTING THE MOUTH AREA OF AN INLET CONDUIT ENTERING A WALKABLE PIPE
SYSTÈME POUR ÉTANCHER ET INTÉGRER LA ZONE DE BOUCHE D'UNE CONDUITE D'ARRIVÉE DÉBOUCHANT DANS UN CONDUIT ACCESSIBLE

(30) Priorität: 24.09.2021 DE 202021105172 U
(43) Veröffentlichungstag der Anmeldung: 29.03.2023
(73) Patentinhaber: Schuster, Rainer, 56593 Horhausen (DE)
(72) Erfinder: Schuster, Rainer, 56593 Horhausen (DE); Schuster, Daniel, 57632 Burglahr (DE)
(74) Vertreter: Wagner Albiger & Partner Patentanwälte mbB

(56) Entgegenhaltungen:
- DE-U1-202018 004 015
- JP-A- H1 120 022
- KR-B1- 101 157 080
- US-B2- 8 936 280

## Beschreibung

Die Erfindung betrifft ein System zur Abdichtung und Einbindung des Mündungsbereiches einer in ein begehbares Kanalrohr einmündenden Zulaufleitung, umfassend
- ein Hutprofil mit einem zylindrischen, zur Einführung in die Zulaufleitung bestimmten Hutschaft und einer am aus der Zulaufleitung herausführenden Ende des Hutschafts radial abstehenden Krempe, die zur innenseitigen Anlage am Kanalrohr bestimmt ist;
- eine zur Einführung in die Zulaufleitung bestimmte und vorübergehend aufweitbare Absperrblase, mittels derer der Hutschaft innenseitig an die Zulaufleitung anpressbar ist;
- ein ringförmiges flexibles Anpressschild zum Anlegen an die Krempe; und
- Anpressmittel zum Anpressen des Anpressschildes an die Krempe.

Ein derartiges System ist beispielsweise aus der DE 20 2018 004 015 U1 bekannt und dient dazu, beispielsweise bei der Sanierung eines Mündungsbereiches, zum Beispiel infolge des Auftretens einer Leckage oder bei einer Neuinstallation eine fachmännische Abdichtung herzustellen. Das bekannte System umfasst eine einteilig ausgeführte Setzvorrichtung, die eine Absperrblase, einen an die Absperrblase angeformten Kragen sowie einen Stützring umfasst, der an mehreren Stellen in seinem Abstand zum Kragen durch Stellmittel verändert werden kann. Eine flache Rundblase auf einem Schild, die dann mit Druckluft beaufschlagt wird, stellt den gleichmäßigen Anpressdruck her. Demgemäß ist die Handhabung der bekannten Setzvorrichtung sehr umständlich und es muss ein Hutprofil durch Belegen der Setzvorrichtung mit einem Glasfaserlaminat unmittelbar vor dem Einbringen aufwendig hergestellt werden. Der Hutschaft kann dabei nur bis zu einer geringen Tiefe von etwa 15 cm in eine Zulaufleitung eingebracht werden, wobei darüber hinaus systembedingt nur rechtwinklig in das Kanalrohr einmündende Zulaufleitungen saniert werden können. Tangential oder als Abzweig ankommende Zulaufleitungen in das Kanalrohr können nicht saniert werden. Ferner bedingt die fest vorgegebene Setzvorrichtung eine bearbeitete Anschlussgröße bis maximal DN150. Dies erscheint verbesserungswürdig.

Aufgabe der Erfindung ist es, ein System der eingangs genannten Art daingehend weiterzuentwickeln, dass es die Nachteile des Standes der Technik überwindet.

Zur Lösung der gestellten Aufgabe wird erfindungsgemäß die Ausgestaltung eines Systems zur Abdichtung des Mündungsbereiches einer in ein Kanalrohr einmündenden Zulaufleitung gemäß den Merkmalen des Patentanspruchs 1 vorgeschlagen.

Vorteilhafte Ausgestaltungen und Weiterbildungen der Erfindung sind Gegenstand der abhängigen Ansprüche.

Erfindungsgemäß ist vorgesehen, dass die Anpressmittel einen im wesentlichen U-förmig ausgebildeten Anpressbügel mit zwei Schenkelenden und einem Verbindungsschenkel umfassen, der die Absperrblase im Bereich des nicht in die Zulaufleitung weisenden Endes übergreift und mit seinen Schenkelenden an diametral gegenüberliegenden Bereichen des Anpressschildes lösbar aufsetzbar ist und eine am Verbindungsschenkel angreifende Spanneinrichtung vorgesehen ist, mittels derer eine Presskraft von den Schenkelenden auf das Anpressschild in Richtung der Krempe erzeugbar ist.

Im Gegensatz zum bekannten Stand der Technik umfasst das erfindungsgemäß vorgeschlagene System demnach separat handhabbare und an den Einsatzort transportierbare Einzelteile, nämlich einerseits ein handelsübliches, vorgefertigtes Hutprofil, welches an die jeweils vorherrschenden Dimensionen der Zulaufleitung im Bereich des Hutschafts angepasst ist.

Ferner greift das erfindungsgemäße System auf eine handelsübliche, im Wesentlichen zylindrisch ausgeführte Absperrblase zurück, die in die Zulaufleitung eingebracht wird und durch Aufweiten zum Beispiel mittels Druckluft festsetzbar ist, um den Hutschaft innenseitig an die Zulaufleitung anzupressen.

Darüber hinaus werden auch das ringförmige Anpressschild und die zugehörigen Anpressmittel als separate Bauteile bereitgestellt und erst am Montageort zum erfindungsgemäßen System zusammengefügt.

Aufgrund der Ausgestaltung der Anpressmittel aus einem im Wesentlichen U-förmig ausgebildeten Anpressbügel, der mit seinen beiden Schenkelenden an diametral gegenüberliegenden Bereichen des Anpressschildes lösbar aufsetzbar ist, passt sich das Anpressschild bei Erzeugen einer entsprechenden Vorspannkraft selbsttätig an die unterschiedlichsten Durchmesser von Kanalrohren an, in welche die abzudichtende Zulaufleitung einmündet.

Nach einem Vorschlag der Erfindung ist die Spanneinrichtung von einer auf die Absperrblase lösbar aufsetzbaren und diese fortsetzenden Gewindestange und einer auf der Gewindestange in Eingriff befindlichen und gegen den Verbindungsschenkel pressenden Spannmutter ausgebildet. Mit einer solchen Spanneinrichtung lassen sich gerade ankommende Zulaufleitungen, d. h. solche, die unter einem rechten Winkel oder mit geringen Abweichungen vom rechten Winkel in das Kanalrohr einmünden, mit geringem Aufwand abdichten.

Dazu weist nach einem weiteren Vorschlag der Erfindung die Gewindestange eine zentrale Durchgangsbohrung auf und ist mit einem Ende abdichtend auf ein Ventil der Absperrblase aufsetzbar, wobei die Gewindestange am anderen Ende ein Anschlussventil aufweist, um ein geeignetes Fluid, zum Beispiel Druckluft, in die Absperrblase über die als Verlängerung dienende Gewindestange einzubringen oder aus der Absperrblase abzulassen.

Nach einem weiteren Vorschlag der Erfindung kann anstelle der aus Gewindestange und Spannmutter gebildeten Spanneinrichtung auch eine am Verbindungsschenkel lösbar befestigbare Adapterplatte vorgesehen sein, auf die eine längenverstellbare, an sich bekannter Verspannstütze aufsetzbar ist, die am diametral gegenüberliegenden Bereich der Innenoberfläche des Kanalrohrs abgestützt wird, sodass auch schräg bzw. tangential in das Kanalrohr einmündende Zulaufleitungen mit dem erfindungsgemäßen System abgedichtet werden können.

Nach einem weiteren Vorschlag der Erfindung umfasst das Anpressschild vorstehende Fixierstifte zum lösbaren Aufstecken der Schenkelenden, wodurch die Handhabung und Funktionssicherheit weiter gesteigert wird.

Das Anpressschild kann nach einem weiteren Vorschlag der Erfindung aus einem elastisch verformbaren Material gebildet sein, um sich bestmöglich an die gekrümmte Innenwandung des Kanalrohrs anzupassen. Ein geeigneter Werkstoff ist insbesondere Hart-PVC.

Das Anpressschild kann nach einem weiteren Vorschlag der Erfindung auf der der Krempe zugewandten Oberfläche zusätzlich mit einer elastisch komprimierbaren Schaumkunststoffschicht versehen sein, beispielsweise einem geeigneten Silikonschaum. Diese Schaumkunststoffschicht gleicht Unebenheiten aus und sorgt überdies für einen gleichmäßigen Anpressdruck des Anpressschildes auf die Krempe des Hutprofils.

Die Länge der Schenkelenden des erfindungsgemäßen Systems kann nach einem weiteren Vorschlag durch aufsteckbare Adapter variiert werden, die in unterschiedlichen Längen vorgehalten werden können.

Mit dem erfindungsgemäßen System ist es möglich, handelsübliche Hutprofile außerhalb des Kanalrohrs vorzubereiten und mit Harz zu tränken und anschließend alle benötigten Teile des Systems an den Einbauort im Kanalrohr zu verbringen. Sodann wird zunächst das Hutprofil in die Zulaufleitung in der gewünschten Einbauorientierung eingesetzt und der korrekte Sitz kann kontrolliert werden, bevor eine Verspannung mit der Absperrblase und den weiteren Teilen des Systems aufgebaut wird.

Weitere Ausgestaltungen und Einzelheiten des erfindungsgemäßen Systems sowie dessen Handhabung werden nachfolgend anhand von Ausführungsbeispielen in der Zeichnung erläutert. Es zeigen:
- Figur 1: in einer perspektivischen Darstellung das erfindungsgemäße System in einer ersten Ausführungsform;
- Figur 2: ein Anpressschild in perspektivischer Darstellung;
- Figur 3: eine Schnittdarstellung eines Anpressbügels;
- Figur 4: den Anpressbügel gemäß Figur 3 in perspektivischer Darstellung;
- Figur 5: das erfindungsgemäße System in einer weiteren Ausführungsform;
- Figur 6: den Anpressbügel gemäß Figur 5 in einer Schnittdarstellung;
- Figur 7: ein Hutprofil gemäß der Erfindung;
- Figur 8: eine Schnittdarstellung der in die Zulaufleitung eingebrachten Vorrichtung mit teilweise weggelassener Verspanneinrichtung.

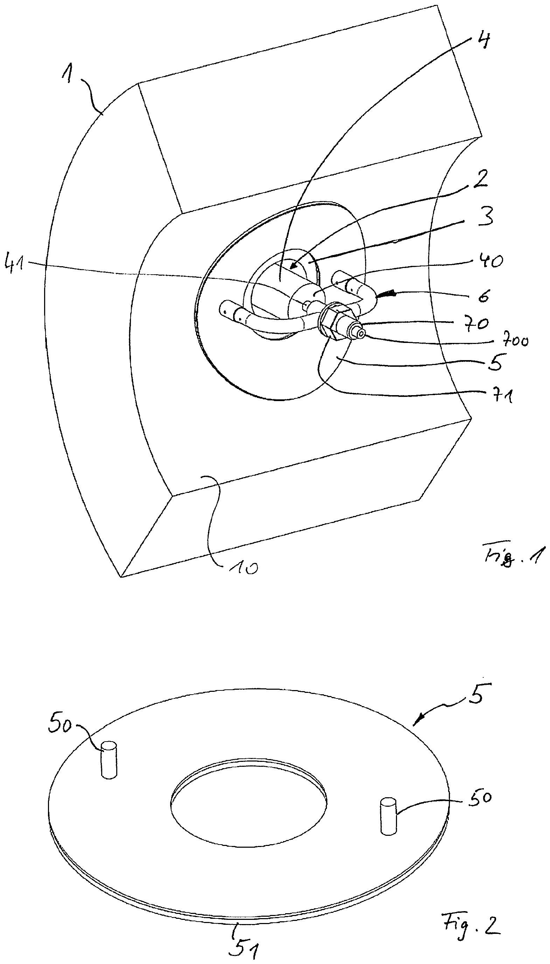

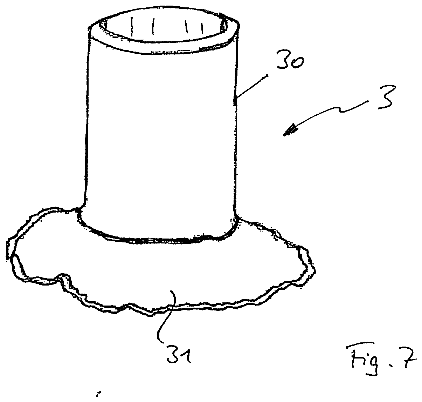

Aus der Figur 1 ist eine Situation ersichtlich, in der eine Zulaufleitung 2 im Wesentlichen rechtwinklig in ein demgegenüber deutlich größeres begehbares Kanalrohr 1 mit Innenoberfläche 10 einmündet. Um den Einmündungsbereich fachgerecht abzudichten und einzubinden, wird ein aus der Figur 7 ersichtliches und an sich bekanntes Hutprofil 3 verwendet, bei dem es sich beispielsweise um ein mit Polyurethan beschichtetes Hutprofil oder ein Filz-Hutprofil handeln kann. Dieses Hutprofil weist einen im Wesentlichen zylindrisch ausgeführten Hutschaft 30 auf, der in seinem Durchmesser an den Durchmesser der Zulaufleitung 2 angepasst ist und verfügt an einem seiner Enden über eine radial abstehende umlaufende Krempe 31.

Um diese Abdichtung auszuführen, wird ein System verwendet, welches neben dem Hutprofil 3 die nachfolgend noch näher erläuterten weiteren Systemkomponenten einer Absperrblase 4, eines Anpressschildes 5 sowie eines Anpressbügels 6 mit einer Spanneinrichtung umfasst.

In einem ersten Schritt wird das Hutprofil, beispielsweise außerhalb des Kanalrohrs 1, mit dem für die Haftung und die Abdichtung verwendeten Harz ausgiebig und vollständig getränkt. Sodann wird der Hutschaft 30 in das in das Kanalrohr 1 einmündende Ende der Zulaufleitung 2 eingeführt, sodass die Krempe 31 an der die Zulaufleitung 2 ringförmig umgebenden Innenoberfläche 10 des Kanalrohrs 1 zur Anlage kommt. Eine eventuell am Hutschaft 30 vorhandene Naht zeigt dabei vertikal nach oben.

Nunmehr wird der in die Zulaufleitung 2 eingeführte Hutschaft 30 in dieser Gebrauchslage durch eine handelsübliche zylindrische Absperrblase 4 fixiert, indem die Absperrblase 4 von der die Krempe 31 aufweisenden Seite her in den Schaft und die Zulaufleitung 2 eingeführt wird. Eine solche Absperrblase 4 verfügt üblicherweise an dem in Gebrauchsposition aus der Zulaufleitung 2 in das Kanalrohr 1 weisenden Ende 40 über ein Ventil 41 und kann zunächst durch Einleiten eines geeigneten Fluids, beispielsweise Druckluft, leicht aufgeweitet werden, sodass der Hutschaft 30 in der Zulaufleitung 2 vorfixiert wird.

Anschließend wird ein aus elastisch verformbarem Material, insbesondere Hart-PVC gebildetes ringförmiges Anpressschild 5, das in näheren Einzelheiten aus der Figur 2 ersichtlich ist, auf die auf der Innenoberfläche 10 des Kanalrohrs 1 aufliegende Krempe 31 des Hutprofil 3 aufgelegt, wozu das Anpressschild 5 vorzugsweise mit einer an die Krempe 31 angepassten Dimensionierung ausgebildet ist, um diese vollständig zu überdecken. Auf der der Krempe 31 zugewandten Oberfläche ist das Anpressschild 5 mit einer Schaumkunststoffschicht 51 zum Beispiel aus Silikonschaum ausgerüstet.

Auf der der Schaumkunststoffschicht 51 gegenüberliegenden und dem Innenraum des Kanalrohrs 1 zugewandten Oberfläche weist das Anpressschild 52 parallel zueinander ausgerichtete und an diametral gegenüberliegenden Bereichen des Anpressschildes 52 vorstehende Fixierstifte 50 auf.

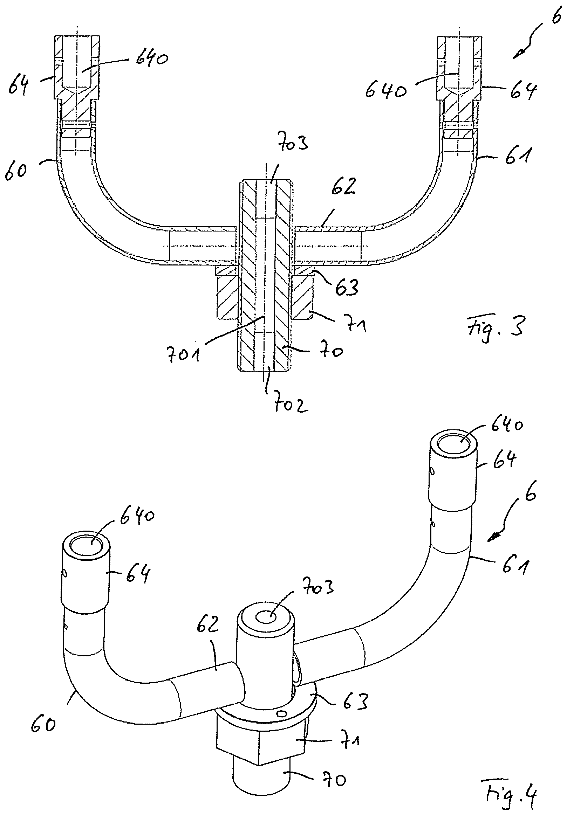

Auf diese Fixierstifte 50 wird ein in näheren Einzelheiten aus den Figuren 3 und 4 ersichtlicher Anpressbügel 6 aufgesetzt, der im Wesentlichen U-förmig ausgebildet ist und zwei voneinander beanstandete Schenkelenden 60, 61 und eine diese verbindenden Verbindungsschenkel 62 aufweist. Auf die beiden Schenkelenden 60, 61 sind Adapter 64 in Verlängerung aufgesetzt, die in unterschiedlicher Längenerstreckung vorgehalten werden können, um die Länge der Schenkelenden 60, 61 variieren zu können. Stirnseitig verfügen die Adapter 64 über je eine Aufnahmebohrung 640, die auf die vorstehenden Fixierstifte 50 formschlüssig aufgesteckt werden können.

Um das Anpressschild 5 auf die auf der Innenoberfläche 10 des Kanalrohrs 1 aufliegende Krempe zu pressen, wird eine Spanneinrichtung eingesetzt, die eine Gewindestange 70 und eine auf der Gewindestange in Eingriff befindliche Spannmutter 71 umfassen. Gewindestange 70 und Spannmutter 71 können beispielsweise aus einem geeigneten Kunststoff, wie POM, gefertigt sein und beispielhaft mit einem M48-Gewinde ausgerüstet sein.

Die Gewindestange 70 ist, wie aus Figur 3 ersichtlich, mit einer axial durchgängig verlaufenden Durchgangsbohrung 701 entlang ihrer Längsachse ausgerüstet und weist an ihrem einen Ende 703 eine Bohrung auf, mit der sie lösbar verrastend auf dem Ventil 41 der Absperrblase 4 aufgesetzt werden kann. Am gegenüberliegenden Ende 700 ist eine weitere Aufnahmebohrung 702 vorgesehen, in die ein Anschlussventil 700 entsprechend dem Ventil 41 der Absperrblase 4 eingesetzt werden kann.

Die Gewindestange 70 verläuft ferner durch eine Bohrung in einer zentral angeordneten Scheibe 63, die zur Ausbildung des Verbindungschenkels 62 mit den beiden Schenkelenden 60,61 verschweißt ist.

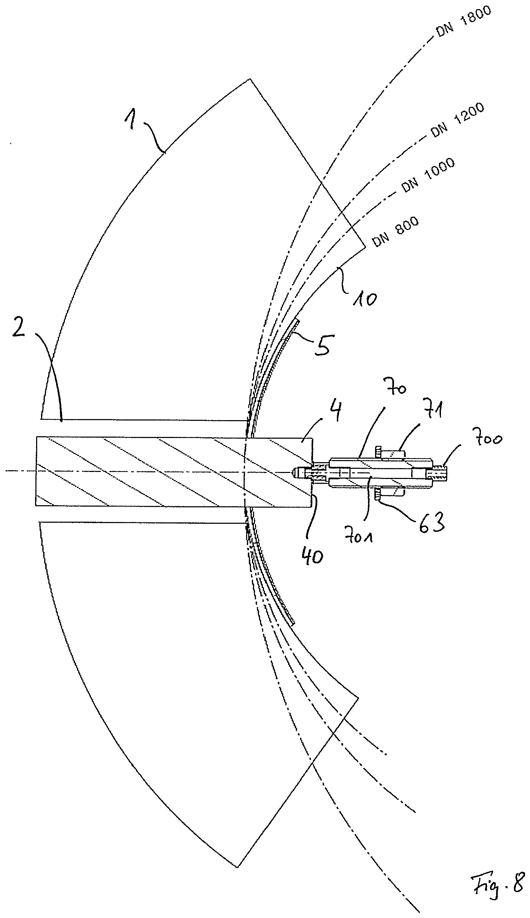

Um nun das Anpressschild 5 auf den Kragen 31 des Hutprofils 3 aufzupressen, werden einerseits die Schenkelenden 60, 61 mit den in den Adaptern 64 ausgebildeten Bohrungen 640 auf die Passstifte 50 des Anpressschildes 5 aufgesetzt, andererseits die Gewindestange 70 mit der Bohrung 703 auf das Ventil 41 der Absperrblase 4 aufgesetzt dort lösbar verrastet. Nunmehr kann die auf der gegenüberliegenden Seite der Scheibe 63 anliegende Spannschraube 71 von Hand angezogen werden, wodurch ausgehend vom Verbindungsschenkel 62 die Schenkelenden 60, 61 eine Anpresskraft in Richtung der Krempe 31 auf das Anpressschild 5 ausüben. Das Anpressschild 5 legt sich sodann infolge seiner elastischen Materialeigenschaft selbsttätig an den Krümmungsverlauf der Innenoberfläche 10 des Kanalrohres 1 an und übt über die Schaumkunststoffschicht 51 einen gleichmäßigen Anpressdruck auf die Krempe 31 in Richtung der Innenoberfläche 10 des Kanalrohres 1 aus. Aus der Figur 8 ist ersichtlich, dass auf diese Weise eine Anpassung an unterschiedlichste Innendurchmesser des Kanalrohrs 1 selbsttätig erfolgt.

Zugleich kann durch weiteres Einfüllen von Druckluft über das Anschlussventil am Ende 702 der Gewindestange die Absperrblase 4 weiter aufgedehnt werden und dient als Gegenlager für den von der Spanneinrichtung ausgeübten Anpressdruck.

Somit kann nun das Hutprofil 3 unter radialer Abstützung des Hutschafts 30 an der Innenoberfläche der Zulaufleitung 2 und Anpressung der Krempe 31 an die Innenoberfläche 10 des Kanalrohrs 1 so lange gehalten werden, bis das auf das Hutprofil 3 aufgebrachte Harz durchgehärtet ist. Anschließend kann die Spannschraube 71 wieder gelockert und die Absperrblase 4 entlüftet werden, so dass die Bauteile des Systems in umgekehrter Reihenfolge entnommen werden können und lediglich das ausgehärtete Hutprofil 3 in der Zulaufleitung 2 und dem Kanalrohr 1 zurückbleibt.

Es versteht sich, dass sämtliche mit dem harzgetränkten Hutprofil 3 in Kontakt kommende Oberflächen zuvor mit einer geeigneten Trennfolie belegt werden können, um Harzanhaftungen vorzubeugen.

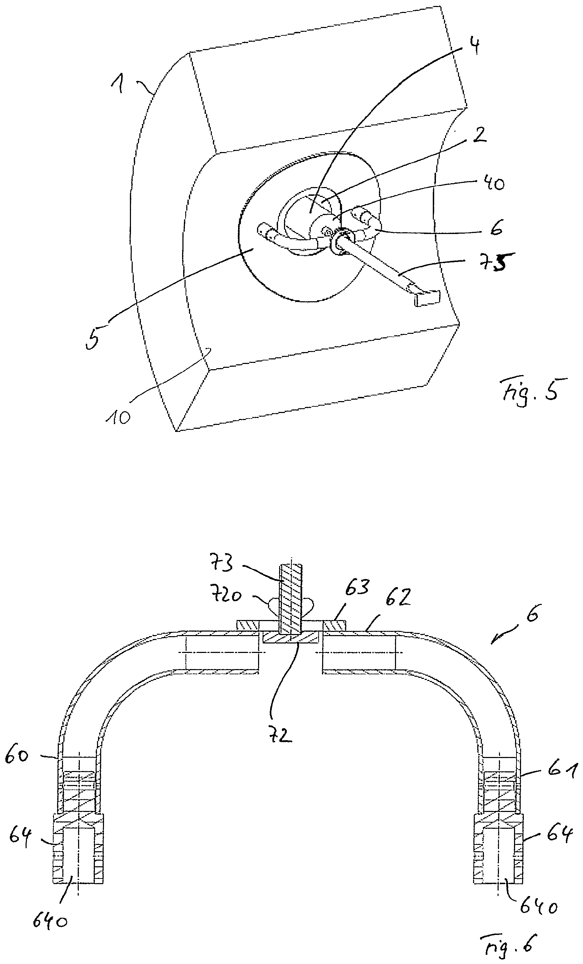

In der Figur 5 ist eine demgegenüber abgewandelte Ausführungsform dargestellt, bei der Zulaufleitung 2 nicht notwendigerweise rechtwinklig in das Kanalrohr 1 einmündet, sondern beispielsweise über einen abgewinkelten Verlauf oder einen eher tangential gerichteten Zulauf in das Kanalrohr 1 einmündet.

In diesem Fall wird als Spanneinrichtung anstelle der in Figur 1 ersichtlichen Gewindestange 70 mit Spannschraube 71 eine Adapterplatte 72 mittels einer Flügelmutter 720 an der Scheibe 3 des Anpressbügels 6 befestigt, die in der entgegengesetzten Richtung zu den beiden Schenkelenden 60, 61 eine Gewindestange 73, beispielsweise des Formats M16 trägt.

Auf diese Gewindestange 73 wird eine handelsübliche Verspannstütze 75 aufgeschraubt, die in ihrer axialen Länge verstellt werden kann und sich am gegenüberliegenden Ende an der in Figur 5 nicht eingezeichneten gegenüberliegenden Innenoberfläche 10 des Kanalrohres 1 als Gegenlager abstützt, um über den Verbindungschenkel 62 Druck auf die Schenkelenden 60, 61 und die Adapterplatte 5 auszuüben. Alle übrigen Bestandteile des Systems und deren Funktionsweise entsprechen dem zuvor geschilderten Ausführungsbeispiel. Allerdings ist beim Ausführungsbeispiel gemäß Figur 5 keine exakt fluchtende Ausrichtung zwischen der Absperrblase 4 und der Spanneinrichtung notwendig, sodass auch tangential gerichtete Zuläufe der Zulaufleitung 2 in das Kanalrohr 1 mit einem entsprechenden Hutprofil 3 in der bereits beschriebenen Weise ausgekleidet werden können.

Die mit dem vorangehend erläuterten System erzielbaren technischen Vorteile lassen sich wie folgt zusammenfassen:
1. Das System ist für den rauen Einsatz entwickelt;
2. Das Hutprofil 3 wird mit Harz getränkt und zunächst gesondert in die Zulaufleitung 2 eingesetzt. Erst dann werden die weiteren Bestandteile des Systems nach und nach eingesetzt;
3. Vor dem Einsetzen der Absperrblase 4 kann das Hutprofil 3 auf korrekten Sitz geprüft werden;
4. Es müssen keine Feineinstellungen oder Justierungen im Kanalrohr 1 vorgenommen werden;
5. Das Anpressschild 5 ist mit einer Kunststoffschaumschicht auf der Anpressseite beschichtet. Diese verteilt den Anpressdruck bei Unebenheiten gleichmäßig auf das Kanalrohr 1;
6. Die ausgewogene Vorspannung des aus Hart-PVC gebildeten Anpressschildes 5 ermöglicht eine flexible Anpassung ohne Justier- und Einstellarbeiten;
7. Das flexible Anpressschild 5 kann in begehbaren Eiprofilen des Kanalrohrs 1 eingesetzt werden;
8. Es können Zulaufleitungen von DN 100 bis DN 200 bearbeitet werden;
9. Das System kann für 45°-, 90°- Abzweiganschlüsse sowie für tangential einmündende Zulaufleitungen 2 verwendet werden;
10. Die Sanierungstiefe der Zulaufleitung 2 mit dem Hutschaft 30 beträgt standardmäßig 30 cm und erfasst in der Regel die wichtige erste Muffe der Zulaufleitung 2;
11. Es kommen handelsübliche Hutprofile 3 zum Einsatz, sodass kein Belegen der Vorrichtung mit Laminat erforderlich ist;
12. Einfache, selbsterklärende Handhabung mit Standardbauteilen.

### Bezugszeichenliste:

- 1:: Kanalrohr
- 2:: Zulaufleitung
- 3:: Hutprofil
- 4:: Absperrblase
- 5:: Anpressschild
- 6:: Anpressbügel
- 10:: Innenoberfläche des Kanals
- 30:: Hutschaft
- 31:: Krempe
- 40:: nicht in Zulaufleitung weisendes Ende
- 50:: Fixierstift
- 51:: Schaumkunststoffschicht
- 60:: Schenkelende
- 61:: Schenkelende
- 62:: Verbindungsschenkel
- 63:: Scheibe
- 64:: Adapter
- 70:: Gewindestange
- 71:: Spannmutter
- 72:: Adapterplatte
- 73:: Gewindestange
- 75:: Verspannstütze
- 640:: Aufnahmebohrung
- 700:: Anschlussventil
- 701:: Durchgangsbohrung
- 702:: erstes Ende
- 703: zweites Ende

## Patentansprüche

1. System zur Abdichtung und Einbindung des Mündungsbereiches einer in ein begehbares Kanalrohr (1) einmündenden Zulaufleitung (2), umfassend
- ein Hutprofil (3) mit einem zylindrischen, zur Einführung in die Zulaufleitung (2) bestimmten Hutschaft (30) und einer am aus der Zulaufleitung (2) herausführenden Ende des Hutschafts (30) radial abstehenden Krempe (31), die zur innenseitigen Anlage am Kanalrohr (1) bestimmt ist;
- eine zur Einführung in die Zulaufleitung (2) bestimmte und vorübergehend aufweitbare Absperrblase (4), mittels derer der Hutschaft (30) innenseitig an die Zulaufleitung (2) anpressbar ist;
- ein ringförmiges flexibles Anpressschild (5) zum Anlegen an die Krempe (31); und
- Anpressmittel zum Anpressen des Anpressschildes (5) an die Krempe (31),
wobei die Anpressmittel einen im wesentlichen U-förmig ausgebildeten Anpressbügel (6) mit zwei Schenkelenden (60, 61) und einem Verbindungsschenkel (62) umfassen, der die Absperrblase (4) im Bereich des nicht in die Zulaufleitung (2) weisenden Endes (40) übergreift und mit seinen Schenkelenden (60, 61) an diametral gegenüberliegenden Bereichen des Anpressschildes (5) lösbar aufsetzbar ist und eine am Verbindungsschenkel (62) angreifende Spanneinrichtung vorgesehen ist, mittels derer eine Presskraft von den Schenkelenden (60, 61) auf das Anpressschild (5) in Richtung der Krempe (31) erzeugbar ist.

2. System nach Anspruch 1, **dadurch gekennzeichnet, dass** die Spanneinrichtung eine auf die Absperrblase (4) lösbar aufsetzbare und diese axial fortsetzende Gewindestange (70) und eine auf der Gewindestange (70) in Eingriff befindliche und gegen den Verbindungsschenkel (62) pressende Spannmutter (71) umfasst.

3. System nach Anspruch 2, **dadurch gekennzeichnet, dass** die Gewindestange (70) eine zentrale Durchgangsbohrung (701) aufweist und mit einem Ende abdichtend auf ein Ventil (41) der Absperrblase (4) aufsetzbar ist und am anderen Ende ein Anschlussventil (700) aufweist.

4. System nach Anspruch 1, **dadurch gekennzeichnet, dass** die Spanneinrichtung eine am Verbindungsschenkel (62) lösbar befestigbare Adapterplatte (72) umfasst, auf die eine längenverstellbare Verspannstütze (75) aufsetzbar ist.

5. System nach einem der Ansprüche 1 bis 4, **dadurch gekennzeichnet, dass** das Anpressschild (5) mit vorstehenden Fixierstiften (50) zum lösbaren Aufstecken der Schenkelenden (60, 61) ausgebildet ist.

6. System nach einem der Ansprüche 1 bis 5, **dadurch gekennzeichnet, dass** das Anpressschild (5) aus einem elastisch verformbaren Material, insbesondere Hart-PVC, gebildet ist.

7. System nach einem der Ansprüche 1 bis 6, **dadurch gekennzeichnet, dass** das Anpressschild (5) auf der der Krempe (31) zugewandten Oberfläche mit einer elastisch komprimierbaren Schaumkunststoffschicht (51) versehen ist.

8. System nach einem der Ansprüche 1 bis 7, **dadurch gekennzeichnet, dass** zur Veränderung der Länge der Schenkelenden (60, 61) aufsteckbare Adapter (64) vorgesehen sind.

## Claims

1. System for sealing and connecting the mouth area of an inlet conduit (2) entering an accessible sewer pipe (1), comprising
- a hat profile (3) with a cylindrical hat shaft (30) intended for insertion into the inlet conduit (2) and a brim (31) projecting radially from the end of the hat shaft (30) leading out of the inlet conduit (2), which brim is intended to rest on the inside of the sewer pipe (1);
- a temporarily expandable shut-off plug (4) intended for insertion into the inlet conduit (2), by means of which the inside of the hat shaft (30) can be pressed against the inlet conduit (2);
- an annular flexible pressure plate (5) for application to the brim (31); and
- pressure means for pressing the pressure plate (5) against the brim (31),
wherein the pressing means comprise a substantially U-shaped pressing bracket (6) with two leg ends (60, 61) and a connecting leg (62), which engages over the shut-off plug (4) in the region of the end (40) not pointing into the inlet conduit (2) and with its leg ends (60, 61) can be attached detachably on diametrically opposite regions of the pressure plate (5) and a tensioning device engaging on the connecting leg (62) is provided, by means of which a pressing force can be generated by the leg ends (60, 61) onto the pressure plate (5) in the direction of the brim (31).

2. System according to claim 1, **characterized in that** the tensioning device comprises a threaded rod (70) which can be placed detachably onto the shut-off plug (4) and continues it axially, and a clamping nut (71) which is engaged on the threaded rod (70) and presses against the connecting leg (62).

3. System according to claim 2, **characterized in that** the threaded rod (70) has a central through-bore (701) and can be fitted with one end in a sealing manner on a valve (41) of the shut-off plug (4) and has a connection valve (700) at the other end.

4. System according to claim 1, **characterized in that** the tensioning device comprises an adapter plate (72) which can be detachably fixed to the connecting leg (62), on which adapter plate a length-adjustable tensioning support (75) can be fitted.

5. System according to any one of claims 1 to 4, **characterized in that** the pressure plate (5) is configured with projecting fixing pins (50) for detachably attaching the leg ends (60, 61).

6. System according to any one of claims 1 to 5, **characterized in that** the pressure plate (5) is formed from an elastically deformable material, in particular rigid PVC.

7. System according to any one of claims 1 to 6, **characterized in that** the pressure plate (5) is provided with an elastically compressible foam synthetic layer (51) on the surface facing the brim (31).

8. System according to any one of claims 1 to 7, **characterized in that** attachable adapters (64) are provided for changing the length of the leg ends (60, 61).

## Revendications

1. Système d'étanchéité et d'intégration de la zone d'embouchure d'une conduite d'arrivée (2) débouchant dans une canalisation accessible (1), comprenant
- un profilé chapeau (3) avec une tige chapeau (30) cylindrique destinée à être introduite dans la conduite d'arrivée (2) et un rebord (31) faisant saillie radialement au niveau de l'extrémité de la tige chapeau (30) sortant de la conduite d'arrivée (2), rebord qui est destiné à être appuyée côté intérieur au niveau de la canalisation (1) ;
- une vessie d'arrêt (4) destinée à être introduite dans la conduite d'arrivée (2) et pouvant être temporairement élargie, au moyen de laquelle la tige chapeau (30) peut être pressée au niveau de la conduite d'arrivée (2) côté intérieur ;
- une plaque de pression annulaire flexible (5) destinée à être appuyée sur le rebord (31) ; et
- des moyens de pression pour presser le bouclier de pression (5) contre le rebord (31),
dans lequel les moyens de pression comprennent un étrier de pression (6) conçu sensiblement en forme de U avec deux extrémités de branche (60, 61) et une branche de connexion (62) qui recouvre la vessie d'arrêt (4) dans la zone de l'extrémité (40) non dirigée vers la conduite d'arrivée (2) et peut être placé de manière amovible avec ses extrémités de branche (60, 61) sur des zones diamétralement opposées de la plaque de pression (5) et un dispositif de tension agissant sur la branche de connexion (62), au moyen duquel une force de pression peut être générée par les extrémités de branche (60, 61) sur la plaque de pression (5) en direction du rebord (31).

2. Système selon la revendication 1, **caractérisé en ce que** le dispositif de tension comprend une tige filetée (70) pouvant être montée de manière amovible sur la vessie d'arrêt (4) et prolongeant celle-ci axialement, et un écrou de serrage (71) en prise sur la tige filetée (70) et exerçant une pression contre la branche de connexion (62).

3. Système selon la revendication 2, **caractérisé en ce que** la tige filetée (70) présente un alésage traversant central (701) et peut être placée de manière étanche par une extrémité sur une soupape (41) de la vessie d'arrêt (4) et présente une soupape de raccordement (700) à l'autre extrémité.

4. Système selon la revendication 1, **caractérisé en ce que** le dispositif de tension comprend une plaque d'adaptateur (72) pouvant être fixée de manière amovible sur la branche de connexion (62), plaque sur laquelle un support de serrage (75) réglable en longueur peut être placé.

5. Système selon l'une quelconque des revendications 1 à 4, **caractérisé en ce que** la plaque de pression (5) est conçue avec des broches de fixation (50) en saillie pour l'emboîtement amovible des extrémités de branche (60, 61).

6. Système selon l'une quelconque des revendications 1 à 5, **caractérisé en ce que** la plaque de pression (5) est formée à partir d'un matériau élastiquement déformable, en particulier du PVC dur.

7. Système selon l'une quelconque des revendications 1 à 6, **caractérisé en ce que** la plaque de pression (5) est dotée, sur la surface tournée vers le rebord (31), d'une couche de mousse plastique (51) élastiquement compressible.

8. Système selon l'une quelconque des revendications 1 à 7, **caractérisé en ce que** des adaptateurs (64) emboîtables sont prévus pour modifier la longueur des extrémités de branche (60, 61).
